# EUROPEAN PATENT SPECIFICATION

(11) **EP 0 610 987 B1**
(45) Date of publication and mention of the grant of the patent: **10.04.1996**
(21) Application number: 94200206.4
(22) Date of filing: 28.01.1994
(51) Int. Cl.: C08G 59/14

(54) **Process for the preparation of alpha-glycol-containing glycidyl ether resins**
Verfahren zur Herstellung von Alphaglycolgruppen enthaltenden Glycidyletherharzen
Procédé de préparation de résines glycidyliques contenant des groupes alpha-glycols

(30) Priority: 01.02.1993 EP 93200245
(43) Date of publication of application: 17.08.1994
(73) Proprietor: SHELL INTERNATIONALE RESEARCH MAATSCHAPPIJ B.V., NL-2596 HR Den Haag (NL)
(72) Inventor: Blok, Jan Rudolf, NL-1031 CM Amsterdam (NL); Vos, Eric Johannes, NL-1031 CM Amsterdam (NL); Stolwijk, Theodorus Bartolomeus, NL-1031 CM Amsterdam (NL)

(56) References cited:
- EP-A- 0 452 265
- FR-A- 1 075 764
- US-A- 4 324 822

## Description

The present invention relates to a process for the preparation of α-glycol-containing glycidyl ether resins, and more in particular to a process for the preparation of glycidyl ethers of polyhydric phenols having an α-glycol content which is higher than generally obtainable with the conventional processes for the preparation of said glycidyl ether resins; to the glycidyl ether resins thus prepared, and to their use. The conventional process for the preparation of glycidyl ether resins of polyhydric phenols, hereinafter referred to as epoxy resins, is the reaction of a polyhydric phenol and an excess of an epihalohydrin, especially epichlorohydrin, hereinafter referred to as ECH, in the presence of an etherification or condensation catalyst and an alkali metal hydroxide. Depending on the molar ratio of phenolic hydroxyl and ECH the resins may vary from a highly viscous liquid to a brittle solid; the liquid resins are obtained when using a high ECH/phenolic hydroxyl ratio and the solid resins are obtained when using a considerably lower ECH/phenolic hydroxyl ratio.

Although each end group of the epoxy resins thus prepared should be in theory an epoxy group, in practice phenolic hydroxyl-, chlorohydrin- and α-glycol end groups are present too.

By means of the above-mentioned conventional process solid epoxy resins, can be prepared containing α-glycol end groups not only in a larger proportion but also in a higher concentration. These are the so-called solvent finished solid α-glycol containing epoxy resins hereinafter referred to as conventional solid epoxy resins.

Such conventional solid epoxy resins are particularly useful in coatings, especially in can-coatings, since α-glycol groups can have a positive effect on a number of coating performance properties in particular improved the reaction with cocuring resins. The disadvantages associated with the above conventional process are that ECH is used, it involves a complicated isolation step and it produces a substantial effluent stream.

US 4,324,822 discloses a process for the preparation of epoxy resins having an α-glycol content of from 0.05 to 0.6 eq/kg by hydrolysing a terminal epoxy group containing starting resin, in the presence of water and a mineral acid or alkali, at a temperature in the range of from 50 to 150° and for a period of from 10 minutes to 20 hours.

However as in the conventional process referred to above, this process requires a cumbersome product isolation step as a result whereof it is commercially and technically unattractive.

Moreover there will be a considerable fluctuation in the α-glycol content of the epoxy resin thus prepared.

US 4,215,210 discloses the reaction of a polyhydric phenol with a blend of epihalohydrin and glycerin monohalohydrin in the presence of a large molar excess of water with respect to the epihalohydrin/glycerin monohalohydrin blend.

Although the epoxy resins thus produced have a relatively high α-glycol content it is expected that this process is difficult to control resulting in low yields of the desired product whilst losses of ECH may be substantial.

A process for the preparation of solid epoxy resins that has a number of advantages over the processes discussed above is the so-called fusion process, wherein e.g. a molar excess of a relatively low molecular weight diglycidyl ether of a dihydric phenol (a diepoxide) is reacted with a dihydric phenol.

This fusion process does not require the use of ECH, it lacks a complicated product isolation step and does not produce an effluent stream. However, the α-glycol content of the solid epoxy resins so prepared is considerably lower compared to that of conventional solid epoxy resins, and is more or less governed by the α-glycol content of the starting diepoxide.

Due to this lower α-glycol content, these fusion resins may not have all the favourable properties of the conventional solid epoxy resins.

A possible route for the preparation of fusion resins having a high α-glycol content would be carrying out a fusion process, wherein a dihydric phenol is reacted with a diglycidyl ether of a dihydric phenol having a higher α-glycol content than the corresponding conventional diglycidyl ethers. However, such diglycidyl ethers having the desired high α-glycol content are not readily available, if at all, and moreover are only known to be prepared via technically unattractive processes. Such processes are rather similar to the processes described in US 4,215,210 referred to above, i.e. a process wherein ECH is reacted with a dihydric phenol in the presence of a large excess of water with respect to the ECH, or wherein part of the ECH is replaced with glycidol or monochloro glycerin.

In view of the foregoing discussions the problem underlying the present invention can be seen in providing a process for the preparation of a diglycidyl ether of a dihydric phenol having a sufficiently high α-glycol content enabling it to be used as a starting material in a fusion process to prepare a solid epoxy fusion resin with the desired high α-glycol content, thereby overcoming the disadvantages associated with the above prior art processes.

The present invention therefore relates to a process for the preparation of α-glycol-containing glycidyl ether resins comprising the reaction of a polyhydric phenol with ECH in the presence of an aqueous alkali metal hydroxide, wherein, when substantially all the phenolic hydroxyls have reacted and moreover the reaction medium is substantially free from ECH and alkali metal hydroxide, a monocarboxylic acid is added and reacted with at least part of the in situ formed glycidyl ether groups at a temperature in the range of from 80 to 180 °C, which is followed by adding a suitable solvent to the reaction mixture and heating the thus obtained system with an amount of an aqueous alkali metal hydroxide solution which is at least sufficient to react with any residual chlorohydrin ether groups and unreacted carboxylic acid as well as to convert the glycidyl ester groups to the corresponding α-glycol groups, and finally isolating the thus obtained α-glycol-containing glycidyl ether resin.

The nature of the first part of the process according to the present invention i.e. the process for the preparation of epoxy resins, which in the second part is modified by the inclusion of an esterification and saponification step, is not critical and may comprise any process wherein a polyhydric phenol is reacted with ECH in the presence of an aqueous alkali metal hydroxide. The nature of the polyhydric phenol is also not critical and may include mononuclear di-and trihydric phenols such as hydroquinone, catechol and phloroglycinol, as well as polynuclear polyhydric phenols such as dihydric diphenols having a single carbon between the rings and exemplified by 2,2-bis(4-hydroxyphenyl)propane and 2,2-bis-(4-hydroxyphenyl) methane, as well as novolac resins. Preferred polyhydric phenols are dihydric phenols having a single carbon between the rings, 2,2-bis(4-hydroxyphenyl) propane, hereinafter referred to as DPP, being especially preferred.

The reaction between the polyhydric phenol and ECH is conducted with a molar excess of ECH with respect to the equivalents of phenolic hydroxyl. Generally ECH will be employed in a ratio of from 1.25 - 5 moles of ECH per equivalent of phenolic hydroxyl.

Said ratio of ECH to phenolic hydroxyl will determine the nature of the reaction product, i.e. a large excess will generally result in converting all phenolic hydroxyl groups into chlorohydrin ether groups which will subsequently be converted to glycidyl ether groups as a result of a reaction with alkali metal hydroxide. When the excess of ECH is relatively small there is a chance that a glycidyl ether group formed in situ reacts with any residual phenolic hydroxyl which results in the formation of an epoxy resin with a higher molecular weight when the polyhydric phenol is di functional and in the formation of cross-linked product when the functionality of the polyhydric phenol is greater than 2.

When the molecular weight of the reaction product becomes too high it may be poorly processable due to its high viscosity.

Therefore the use of a relatively large excess of ECH is preferred. The alkali metal hydroxide, in the presence of which the reaction between ECH and the polyhydric phenol occurs, is added in an amount such that the number of moles of alkali metal hydroxide per equivalent of phenolic hydroxyl employed is <1, and preferably in the range of from 0.75 to 0.9:1. Advantageously the alkali metal hydroxide is added gradually as an aqueous solution containing from 40 to 60% by weight of the hydroxide.

The reaction between the polyhydric phenol and ECH (or another epihalohydrin such as epibromohydrin) may if desired be conducted in the presence of a known etherification catalyst. Examples of suitable etherification catalysts are tertiary and quaternary phosphonium compounds such as triphenylphosphine or tetraphenyl phosphonium halide; tertiary amines such as triethylamine; and quaternary ammonium compounds such as tetramethyl ammonium halide, preferably tetramethyl ammonium chloride, tetraethyl ammonium chloride and tetramethyl ammonium bromide. In general such catalysts are used in a range of from 0.001 to 0.5 mole % per equivalent of phenolic hydroxyl.

The reaction medium wherein the reaction between the polyhydric phenol and ECH is conducted may further include an organic solvent, which may replace at least part of the water for dissolving the alkali metal hydroxide. Isopropanol is a preferred solvent for said reaction.

All of the alkali metal hydroxide will have been consumed when substantially all the phenolic hydroxyls have reacted, as can be determined by known analytical techniques such as high performance liquid chromatography.

In view of the fact that the amount of alkali metal hydroxide used is deficient with respect to the phenolic hydroxyls employed, the conversion of the chlorohydrin ether groups to glycidyl ether groups will be incomplete. At this stage the reaction product present in the reaction medium thus comprises glycidyl ether- as well as some chlorohydrin ether endgroups.

Before the in situ formed glycidyl ether groups are esterified, the residual ECH is removed from the reaction medium e.g. via distillation. Moreover when the reaction between ECH and the phenolic hydroxyl groups has been conducted in the presence of a solvent it is preferred to remove said solvent from the reaction medium, since the esterification is preferably conducted in a solvent-free reaction medium.

The monocarboxylic acids which may suitably be employed in the above esterification reaction include aliphatic, cycloaliphatic and aromatic monocarboxylic acids, which acids may optionally be substituted.

When the carboxylic acid used in the esterification step is a non-substituted aliphatic carboxylic acid, it is preferred to use the lower molecular weight species of this class of acids and especially formic acid, for obtaining a high degree of esterification. A higher degree of esterification can be achieved with higher molecular weight aliphatic carboxylic acids, substituted with a polar group, preferably attached to the α-carbon atom of the acid. Further it is also preferred to use cycloaliphatic and aromatic carboxylic acids, which have been substituted with a polar group. Preferred polar groups are hydroxyl groups, ether groups and halogen atoms. Chlorine is a preferred halogen substituent.

Examples of suitable polar substituted monocarboxylic acids for use in the process of the present invention include monochloroacetic acid, 2-chloropropionic acid, 3-chloropropionic acid, 2-chlorobutyric acid, methoxyacetic acid, lactic acid, 2-hydroxybutyric acid and 2-chlorobenzoic acid; lactic acid is a preferred polar substituted acid.

The amount of monocarboxylic acid added to the reaction mixture, free of ECH and alkali metal hydroxide, depends on the desired α-glycol content of the end product. Since the epoxy resin prepared prior to the esterification step, hereafter referred to as the crude resin, may already contain some α-glycol, this amount should be taken into account when calculating the amount of carboxylic acid required in the esterification step.

In general it is considered advantageous to employ a molar excess of carboxylic acid with respect to the required increase in α-glycol content and only partially convert the added carboxylic acid to the corresponding glycidyl ester group. This approach has the advantage in that it overcomes excessively long reaction times required to achieve complete conversion of the carboxylic acid added, and simultaneously reduces the loss of epoxy groups due to unwanted side reactions.

The esterification may conveniently be carried out at a temperature in the range of from 80 to 180 °C. Preferably the esterification is conducted under reflux conditions at a temperature below the boiling point of the acid used. However, when the boiling point of said acid is too low, esterification may suitably be conducted at a higher than atmospheric pressure.

The time required to achieve the desired degree of esterification will be largely determined by the acidity of the acid, the amount of acid added and the esterification temperature. However, the presence of an alkali metal halide and especially an alkali metal halide in combination with water, was found to have a positive effect on the rate and/or degree of esterification. In a process wherein the formation of the crude resin and the subsequent esterification step form part of a fully integrated process, the alkali metal halide and the water will generally already be present when the esterification step is started with. However, when a crude resin is used which is halide salt-free and/or water-free or contains said compounds in an insufficient concentration, it is advantageous to add said halide and/or water to the reaction mixture so that it contains approximately 5% of water and > 0.01% w of halide salt based on the amount of crude resin.

Usually a reaction time from 0.5 - 2 h at 120 °C will be sufficient to produce a resin with the required α-glycol content; though shorter and longer times are not excluded.

When reaction between ECH and the phenolic hydroxyls for the preparation of the crude resin has been conducted in the presence of a catalyst, said catalyst may also have its effect on the subsequent esterification step, however, additional esterification catalysts such as tertiary amines, may be added.

When the desired degree of esterification has been reached, the reaction mixture is contacted with a sufficient amount of an organic solvent, to arrive at a resin concentration in the range of from 15-50% by weight. Said solvent should have a limited water miscibility and should for example not contain any active hydrogen, such as present in -NH-, -NH₂ and -OH. Suitable solvents to be employed as single solvent or in a blend of solvents include ketones such as methyl ethyl ketone, methyl isobutyl ketone, methyl butyl ketone, methyl normal amyl ketone, and aromatic hydrocarbons such as toluene and xylene.
Depending on the nature of the solvent and the amount of brine present in the esterification reaction medium, the solvent-containing reaction medium may vary from a clear or slightly turbid solution to an inhomogeneous system, which may ultimately result in phase separation.

In order to effect the saponification of the epoxy ester groups, an aqueous alkali metal hydroxide solution, suitably having a hydroxide content in the range of from 1-50% by weight, is added to the solvent containing reaction medium in an amount which is at least sufficient to react with any residual chlorohydrin ether groups and any unreacted carboxylic acid, as well as to convert the epoxy ester groups to the corresponding α-glycol groups. Generally the alkali metal hydroxide will be added in an amount which corresponds with a ratio in the range of from > 1 - 5 moles of hydroxide per mole of acid added and chlorohydrin ether group present. Subsequently the reaction mixture is heated with stirring at a temperature which may conveniently be in the range of from 60 to 110 °C and preferably under reflux conditions, to simultaneously convert the ester groups to α-glycol groups and any residual chlorohydrin ether groups to glycidyl ether groups.

The period of time required to complete the reaction will be governed by the reaction temperature, the excess of alkali metal hydroxide and the concentration of the reactants. Generally from 30 min to 2 hours will be sufficient, though shorter and longer reaction times are not excluded. The preferred alkali metal hydroxide used is sodium hydroxide.

Subsequent to saponification, the α-glycol-containing resin is isolated from the reaction mixture, e.g. by allowing the reaction medium to settle e.g. at a temperature in the range of from 50 to 100 °C and separating the aqueous phase. Subsequently the organic phase is neutralized with an acid wash for which e.g. an approximately 3.5 %wt aqueous sodium phosphate solution may be used, followed by washing with a sufficient volume of water. After each wash the aqueous phase which occurs after phase separation is removed. Finally the organic solvent may be removed by distillation under reduced pressure.

The α-glycol-containing glycidyl ethers prepared according to the process of the present invention based on a dihydric phenol, such as 2,2-bis(4-hydroxyphenyl)propane, may advantageously be used in the preparation of higher molecular weight polyglycidyl ether resins having a high α-glycol content, via the so-called fusion process. In this fusion process the reactants, i.e. said α-glycol-containing diglycidyl ether resin and a dihydric phenol, are reacted in the molten form, optionally in the presence of suitable catalyst, e.g. ethyltriphenyl phosphonium iodide, at a temperature in the range of from 80 to 200 °C and preferably from 120 to 180 °C, until the desired epoxy group concentration has been achieved. An evaluation of the thus prepared fusion resins demonstrated that their performance properties are very similar to those of the corresponding conventional solid epoxy resins, described hereinbefore.

Other potential outlets for the α-glycol-containing glycidyl ethers of polyhydric phenols, prepared according to the process of the present invention, are e.g. in blends with other epoxy or non-epoxy resins, for use as a component of adhesive, electrical, structural and coating compositions, in combination with suitable cross-linking systems, but also as reactive component for further synthesis work.

The invention will be illustrated by means of the following examples, for which the following information is provided: For the preparation of the α-glycol-containing glycidyl ether resins, two crude 2,2-bis(4-hydroxyphenyl)propane based glycidyl ether resins were used as starting material.
The composition of said crude resins was:

| Crude resin | EGC mmol/Kg | α-glycol mmol/Kg | hydrolysable chlorine mmol/Kg | NaCl %w |
|---|---|---|---|---|
| A | 5130 | 58 | 192 | - |
| B | 4743 | 30 | 592 | 0.015 |

### Methods used for analyzing glycidyl ether resins

a) EGC was determined according to ISO 3001.
b) Hydrolysable chlorine was determined via High Performance Liquid Chromatography.
c) α-Glycol content was determined following the method described by Siggia & Hanna in "Quantitative Organic Analysis via Functional groups", 4th edition, 1979, p.42.

### Examples 1-6

The crude resin B was heated to 120 °C together with sufficient NaCl and water to arrive at a resin having a NaCl content of 20 %w and containing 3000 mmol of water/Kg of resin. Subsequently 350 mmol of carboxylic acid of a type as indicated hereinafter in Table 1, was added per Kg of resin, and heating continued for 45 minutes. This was followed by addition of methyl isobutyl ketone (MIBK) to provide a resin concentration of 35 %w, and a sufficient amount of a 5 %w aqueous caustic solution to provide a molar ratio of NaOH to carboxylic acid added plus hydrolysable chlorine (chlorohydrin) of 2.5:1. This solution was refluxed at 92 °C for 60 minutes and subsequently phase separation was allowed to occur at 70 °C for 10 minutes, which was followed by separating off the aqueous (brine) layer. The organic phase was washed for 10 minutes at 70 °C with approximately 1000 g of a 3.5 %w aqueous sodium phosphate solution and finally with 1000 g of water. After each wash phase separation was allowed to occur. Finally the organic solvent was removed by distillation; the final conditions of 140 °C and 5 mbar were reached in 30 minutes.

Some analytical data of the resins thus prepared are presented in Table 1.

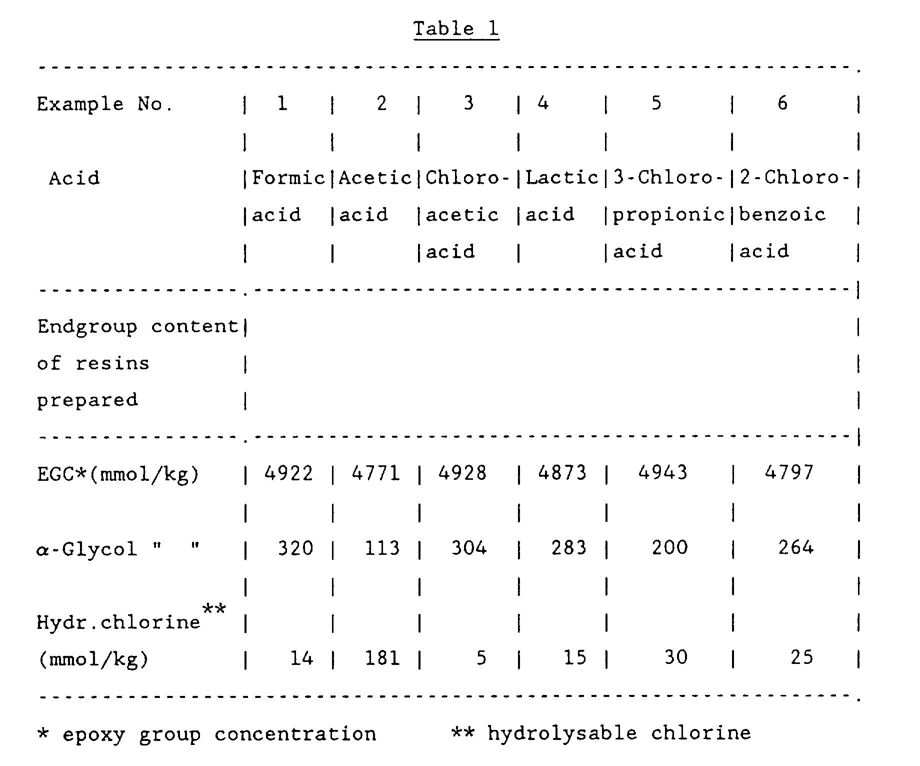

### Examples 7-13

The procedures of Examples 1-6 were repeated with the exception that the NaCl content was varied as indicated in Table 2, the addition of water was omitted, the esterification was allowed to proceed for 90 minutes, and the acids used were restricted to formic acid and lactic acid.
The resulting analytical data have been collected in Table 2.

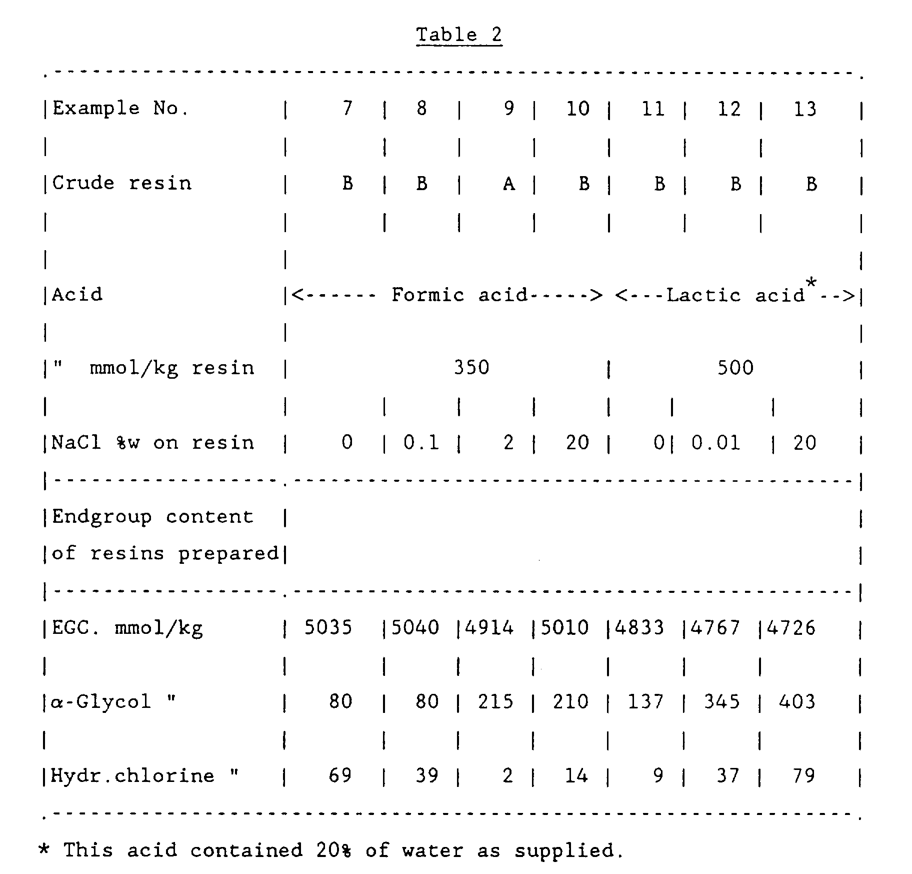

### Examples 14-19

The procedures of Examples 7-13 were repeated with the exception that the experiments were conducted in the presence of 10 or 20 %w of NaCl on resin, and the amount of water was varied as indicated in Table 3 hereinafter, which Table also includes the endgroup concentrations of the resins prepared.

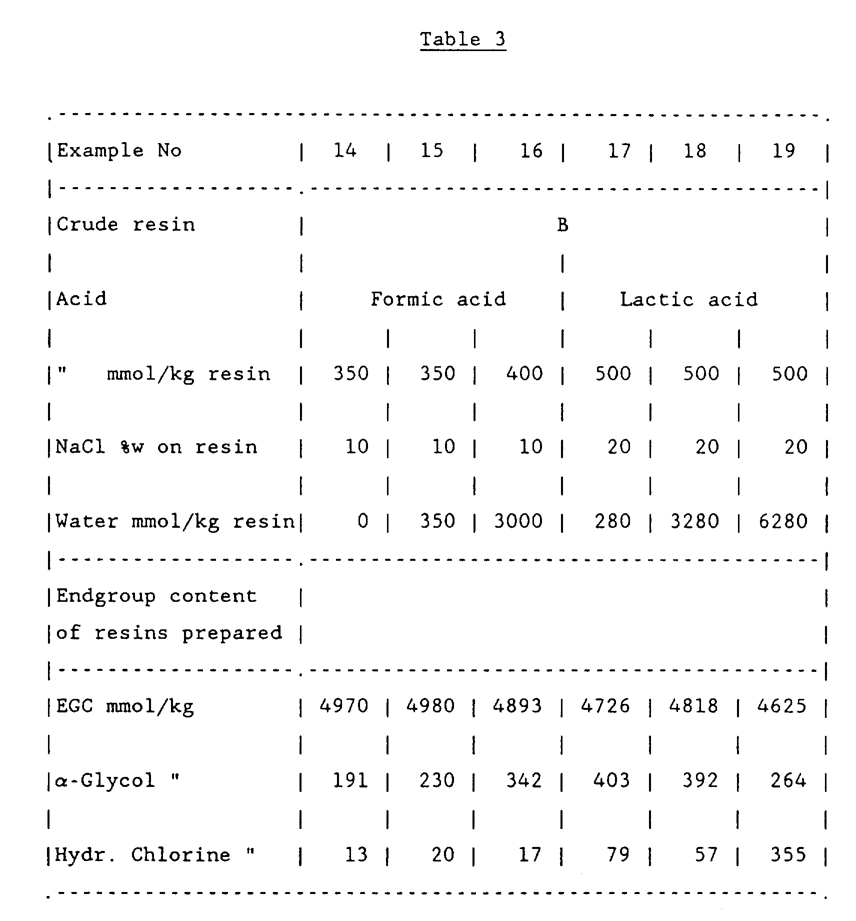

From the data presented in Tables 2 and 3 it can be observed that the presence of NaCl, and in particular NaCl in combination with water can have a significant effect on the introduction of α-glycol groups.

### Examples 19-25

Two α-glycol containing glycidyl ether resins of the type as prepared according to a method similar to the one used in Examples 1 and 4 respectively, were used as starting material for the preparation of higher molecular weight α-glycol-containing glycidyl ether resins via a fusion reaction with 2,2-bis (4-hydroxyphenyl)propane (DPP). The first of said resinous starting materials (C) had been prepared via an esterification step employing formic acid, and had the following endgroup content distribution (expressed as mmol/kg resin). EGC: 4990, α-glycol : 284 and hydrolysable chlorine: 14. The second starting resin (D) had been prepared via esterification with lactic acid and had a rather similar endgroup distribution, i.e. EGC: 4970, α-glycol: 280 and hydr. chlorine :10.

The fusion reactions were conducted on a 3 - 4 kg scale. The starting α-glycol- containing glycidyl ether resin was mixed with the phenolic compound, in a weight ratio as indicated in Table 4 hereinafter, at a temperature of 120 °C and under a nitrogen purge. Subsequently 400 ppm of ethyltriphenyl phosphonium iodide was added, and the temperature of the reaction mixture was gradually raised to 180 °C at an approximate rate of 0.6 °C/min. The reaction mixture was held at this temperature for 30 minutes before being dumped.

The end group distribution of the fusion resins thus prepared are given in Table 4 which also gives the corresponding resin viscosity of said resins.

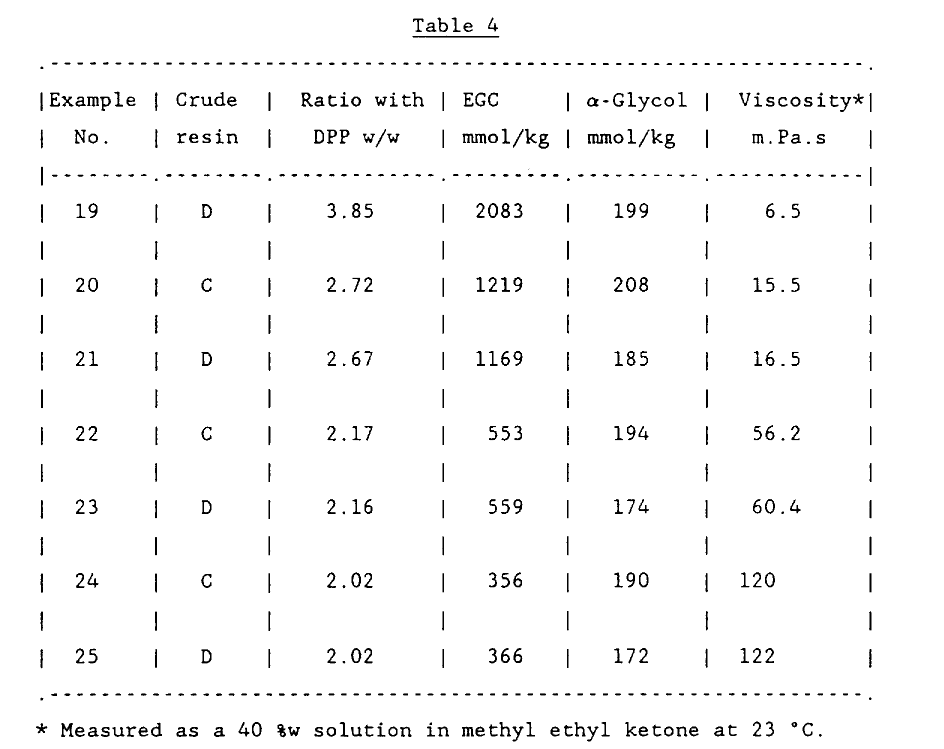

It was found that not only the resin characteristics but also the performance properties of the higher molecular weight α-glycol-containing glycidyl ether resins prepared in Examples 19-25 are similar to those of the corresponding conventional solid epoxy resins prepared via a conventional process as described hereinbefore.

## Claims

1. A process for the preparation of α-glycol-containing glycidyl ether resins comprising the reaction of a polyhydric phenol with epichlorohydrin (ECH) in the presence of an aqueous alkali metal hydroxide, wherein, when substantially all the phenolic hydroxyls have reacted and moreover the reaction medium is substantially free from ECH and alkali metal hydroxide, a monocarboxylic acid is added and reacted with at least part of the in situ formed glycidyl ether groups at a temperature in the range of from 80 to 180 °C, which is followed by adding a suitable solvent to the reaction mixture and heating the thus obtained system with an amount of an aqueous alkali metal hydroxide solution which is at least sufficient to react with any residual chlorohydrin ether groups and unreacted carboxylic acid as well as to convert the glycidyl ester groups to the corresponding α-glycol groups, and finally isolating the thus obtained α-glycol-containing glycidyl ether resin.

2. A process as claimed in claim 1, wherein ECH is employed in a range of from 1.25-5 moles per equivalent of phenolic hydroxyl.

3. A process as claimed in claims 1 or 2, wherein the ratio of moles of alkali metal hydroxide to equivalents of phenolic hydroxyl is in the range of from 0.75-0.9:1.

4. A process as claimed in any one of claims 1 to 3, wherein the monocarboxylic acid is an aliphatic mono-carboxylic acid, and preferably formic acid.

5. A process as claimed in claim 4, wherein the monocarboxylic acid carries a polar substituents attached to the α-C atom of the acid, which substituent is selected from the group consisting of hydroxyl groups, ether groups and halogen atoms.

6. A process as claimed in any one of claims 1-5, wherein the carboxylic acid is employed in a molar excess with respect to the required increase of the α-glycol content, and the added carboxylic acid is only partially converted to the corresponding glycidyl ester group.

## Patentansprüche

1. Verfahren zur Herstellung von α-glykolhaltigen Glycidyletherharzen, das aus der Umsetzung eines mehrwertigen Phenols mit Epichlorhydrin (ECH) in Gegenwart einer wäßrigen Alkalihydroxidlösung besteht, bei dem man bei weitgehend vollständiger Umsetzung der phenolischen Hydroxylgruppen und bei weitgehender ECH- und Alkalihydroxid-Abwesenheit des Reaktionsmediums eine Monocarbonsäure zugibt und mit mindestens einem Teil der in-situ gebildeten Glycidylethergruppen bei einer Temperatur von 80 bis 180°C umsetzt, anschließend der Reaktionsmischung ein geeignetes Lösungsmittel zusetzt und das so erhaltene System mit einer mindestens zur Umsetzung mit jeglichen restlichen Chlorhydrinethergruppen und mit nichtumgesetzter Carbonsäure sowie zur Umwandlung der Glycidylestergruppen in die entsprechenden α-Glykolgruppen ausreichenden Menge einer wäßrigen Alkalihydroxidlösung erhitzt und schließlich das so erhaltene α -glykolhaltige Glycidyletherharz abtrennt.

2. Verfahren nach Anspruch 1, bei dem man ECH im Bereich von 1,25-5 mol pro Äquivalent an phenolischen Hydroxylgruppen einsetzt.

3. Verfahren nach Anspruch 1 oder 2, bei dem man ein Verhältnis der Mole an Alkalihydroxid zu Äquivalenten an phenolischen Hydroxylgruppen im Bereich von 0,75-0,9:1 wählt.

4. Verfahren nach einem der Ansprüche 1-3, bei dem man als Monocarbonsäure eine aliphatische Monocarbonsäure, vorzugsweise Ameisensäure, einsetzt.

5. Verfahren nach Anspruch 4, bei dem die Monocarbonsäure einen an das α-C-Atom der Säure gebundenen polaren Substituenten trägt, den man aus der Gruppe bestehend aus Hydroxylgruppen, Ethergruppen und Halogenatomen, auswählt.

6. Verfahren nach einem der Ansprüche 1-5, bei dem man die Carbonsäure in einem molaren Überschuß hinsichtlich der erforderlichen Erhöhung des α-Glykolgehalts einsetzt und die zugegebene Carbonsäure nur teilweise zu den entsprechenden Glycidylethergruppen umsetzt.

## Revendications

1. Procédé de préparation de résines d'éther glycidylique contenant un α-glycol, comprenant la réaction d'un phénol à plusieurs fonctions OH avec de l'épichlorhydrine (ECH), en présence d'un hydroxyde de métal alcalin aqueux, dans lequel, lorsque la quasi totalité des groupes hydroxyle phénoliques ont réagi et qu'en outre le milieu réactionnel est essentiellement dépourvu de ECH et d'hydroxyde de métal alcalin, on ajoute un acide monocarboxylique et on le fait réagir avec au moins une partie des groupes éther glycidylique formés in situ, à une température dans la gamme de 80 à 180°C, la réaction étant suivie de l'addition d'un solvant convenable au mélange réactionnel et du chauffage du système ainsi obtenu, avec une quantité de solution aqueuse d'hydroxyde de métal alcalin au moins suffisante pour faire réagir tout groupe éther de chlorhydrine résiduel éventuel et tout acide carboxylique n'ayant pas réagi, ainsi que pour convertir les groupes ester glycidylique en groupes α-glycol correspondants, et enfin l'isolement de la résine d'éther glycidyliques contenant un α-glycol ainsi obtenue.

2. Procédé selon la revendication 1, dans lequel la ECH est employée à raison de 1,25-5 moles par équivalent d'hydroxyle phénolique.

3. Procédé selon l'une quelconque des revendications 1 ou 2, dans lequel le rapport du nombre de moles d'hydroxyde de métal alcalin au nombre d'équivalents d'hydroxyle phénolique est dans la gamme de 0,75-0,9:1.

4. Procédé selon l'une quelconque des revendications 1 à 3, dans lequel l'acide monocarboxylique est un acide monocarboxylique aliphatique, et de préférence l'acide formique.

5. Procédé selon la revendication 4, dans lequel l'acide monocarboxylique porte un substituant polaire fixé à l'atome de C en α de l'acide, ce substituant étant choisi dans l'ensemble constitué par les groupes hydroxyle, les groupes éther et les atomes d'halogène.

6. Procédé selon l'une quelconque des revendications 1-5, dans lequel l'acide carboxylique est employé en excès molaire par rapport à l'augmentation requise de la teneur en α-glycol, et l'acide carboxylique ajouté n'est que partiellement converti en groupe ester glycidylique correspondant.
